# EUROPÄISCHE PATENTSCHRIFT

(11) **EP 2 664 485 B1**
(45) Veröffentlichungstag und Bekanntmachung des Hinweises auf die Patenterteilung: **19.02.2020**
(21) Anmeldenummer: 13166226.4
(22) Anmeldetag: 02.05.2013
(51) Int. Cl.: H02J 7/34, B60L 58/21, B60L 58/24

(54) **Verfahren zum Betreiben eines Batteriesystems, Batteriesystem und Kraftfahrzeug**
Method for operating a battery system, battery system and motor vehicle
Procédé destiné au fonctionnement d'un système de batterie, système de batterie et véhicule automobile

(30) Priorität: 10.05.2012 DE 102012207806
(43) Veröffentlichungstag der Anmeldung: 20.11.2013
(73) Patentinhaber: ROBERT BOSCH GMBH, 70442 Stuttgart (DE); Samsung SDI Co., Ltd., Yongin-si Gyeonggi-do 446-577 (KR)
(72) Erfinder: Wolff, Hans-Joerg, 73614 Schorndorf (DE); Partes, Hans, 71679 Asperg (DE); Heubner, Anne, 70469 Stuttgart (DE)
(74) Vertreter: Bee, Joachim

(56) Entgegenhaltungen:
- US-A- 4 101 787
- US-A- 4 297 590
- US-A- 4 689 531
- US-A- 5 886 503

## Beschreibung

Die vorliegende Erfindung betrifft ein Verfahren zum Betreiben eines Batteriesystems, ein Batteriesystem, das gemäß dem Verfahren betreibbar ist, sowie ein Kraftfahrzeug mit dem Batteriesystem.

### Stand der Technik

Batteriesysteme zur Anwendung in Kraftfahrzeugen, auch Traktionsbatterien genannt, bezeichnen bekanntermaßen eine Zusammenschaltung von mehreren einzelnen Batteriezellen oder Batteriemodulen, die Batteriezellen umfassen. Im Vergleich zu Konsumerbatterien besitzen solche Batteriesysteme eine vergleichsweise höhere Batteriekapazität. Um in jedem Fahrzustand des Kraftfahrzeugs, etwa während des Anfahrens, ausreichend Leistung liefern zu können, sind solche Batteriesysteme hochstromfest ausgelegt. Durch eine serielle Zusammenschaltung von Batteriezellen oder Batteriemodulen wird die Nennspannung des Batteriesystems festgelegt, eine Parallelschaltung von Batteriezellen oder Batteriemodulen wird häufig zusätzlich angewendet, um die Batteriesystemkapazität zu erhöhen.

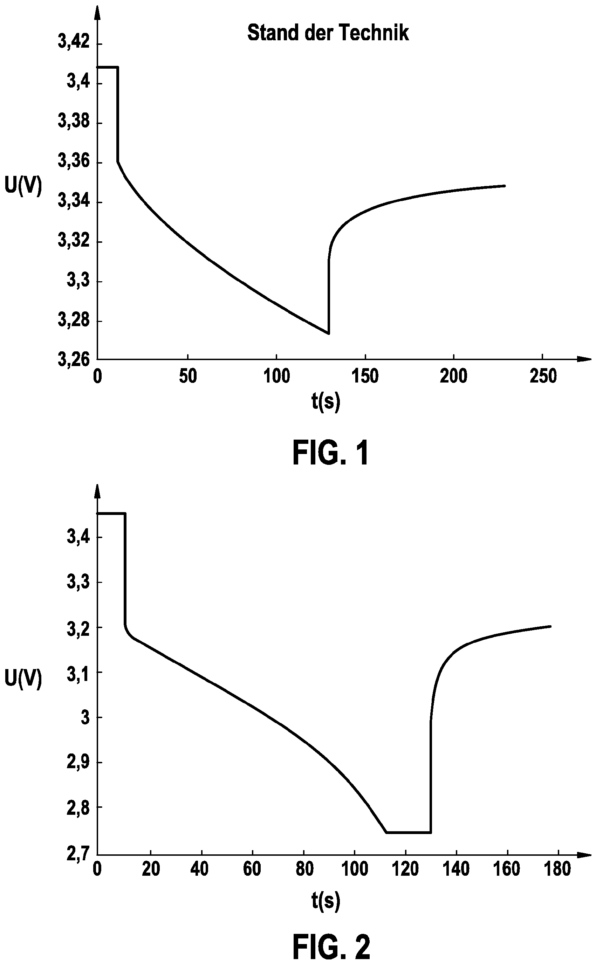

Herkömmliche Batterien weisen einen inhärenten Innenwiderstand auf. Am Innenwiderstand fällt eine Verlustspannung ab, die die von der Batterie abgegebene Spannung reduziert. Wird einer Batterie Strom entnommen, sie also belastet, so ändert sich ihr Innenwiderstand währenddessen dynamisch. Wird etwa eine Lithium-Ionen-Batterie mit einem Strom entladen, z. B. 1 C bei einer Batteriekapazität von 60 Ah, so stellt sich der in der Figur 1 gezeigte Verlauf für die Ausgangsspannung der Lithium-Ionen-Batterie ein. Die Spannung verläuft nach einem Stromsprung zunächst in einem konstanten Plateau und fällt danach ab, da sich der Innenwiderstand währenddessen erhöht.

Aus der DE 10 2010 041 014 ist ferner ein Verfahren zum Betreiben eines Batteriesystems bekannt. Das Batteriesystem weist eine Batterie auf, die ihrerseits einen Batteriemodulstrang mit einer Mehrzahl von in Reihe geschalteten Batteriemodulen aufweist. Jedes Batteriemodul umfasst eine Koppeleinheit, die ausgelegt ist, das Batteriemodul vom Batteriemodulstrang abzukoppeln, das Batteriemodul zu überbrücken oder das Batteriemodul mit den anderen Batteriemodulen in Reihe zu verschalten, so dass eine Spannung am Batteriemodulstrang variabel eingestellt, das heißt erhöht oder abgesenkt werden kann.

### Offenbarung der Erfindung

Erfindungsgemäß wird ein Verfahren gemäß Anspruch 1 zum Betreiben eines Batteriesystems mit wenigstens einem ersten und einem zweiten Batteriemodul zur Verfügung gestellt.

Ferner wird ein Batteriesystem mit wenigstens einem ersten und einem zweiten Batteriemodul und einer Steuereinheit zur Verfügung gestellt, wobei die Steuereinheit ausgelegt ist, das erfindungsgemäße Verfahren durchzuführen.

Außerdem wird ein Kraftfahrzeug zur Verfügung gestellt, das das Batteriesystem umfasst, wobei das Batteriesystem mit einem Antriebssystem des Kraftfahrzeugs verbunden ist.

### Vorteile der Erfindung

Das erfindungsgemäße Verfahren kann das Entstehen hoher Innenwiderstände in den Batteriemodulen verhindern. Bei der Entladung einer Batteriezelle bzw. eines Batteriemoduls, das eine Batteriezelle umfasst, kann insbesondere durch eine hohe Stromentnahme ein derartiger hoher Innenwiderstand im Batteriemodul entstehen. Bei Entladung mit hohen Strömen kann insbesondere ein Verarmungseffekt im Batteriemodul auftreten. Dieser Effekt ruft einen Einbruch der vom Batteriemodul bereitgestellten Spannung hervor. Der Effekt verstärkt sich insbesondere bei einem niedrigen Ladezustand, bei niedriger Temperatur und bei hoher langandauernder Strombelastung des Batteriemoduls. Ferner kann der Effekt die Alterung eines Batteriemoduls beschleunigen.

Das erfindungsgemäße Verfahren kann das Entstehen eines hohen Innenwiderstands und insbesondere das Auftreten eines Verarmungseffekts verringern, indem es insbesondere das erste Batteriemodul nur für die festgelegte Taktzeit aktiviert und nach Ablauf der Taktzeit anschließend das zweite Batteriemodul anstatt des ersten Batteriemoduls aktiviert. Das erste Batteriemodul wird insbesondere deaktiviert, sobald das zweite Batteriemodul aktiviert wird, dadurch ändert sich im Wesentlichen zwar die Gesamtspannung des Batteriesystems nicht, das gerade unbenutzte bzw. deaktivierte Batteriemodul kann sich jedoch erholen, das heißt, es kann durch chemische Ausgleichsvorgänge den Verarmungszustand abbauen und es kann seinen Innenwiderstand senken. Wird das unbenutzte Batteriemodul nach einer bestimmten Erholungszeit wieder aktiviert, ist sein Innenwiderstand niedriger. Bei niedrigem Innenwiderstand entstehen weniger Spannungsabfall und Verlustleistung im Batteriemodul. Das erfindungsgemäße Verfahren kann ferner die Effizienz des Batteriesystems steigern, eine ungleichmäßige Belastung bzw. die Alterung von Batteriemodulen ausgleichen, Verarmungseffekte durch Dauerbetrieb eines Batteriemoduls vermeiden und die Langlebigkeit des Batteriesystems durch gleichmäßigere Belastung der Batteriemodule verbessern.

Das erfindungsgemäße Verfahren regeneriert insbesondere das deaktivierte erste Batteriemodul. Das erste Batteriemodul wird bevorzugt für eine vorbestimmte Erholungszeit deaktiviert, währenddessen chemische Ausgleichsvorgänge den Innenwiderstand des Batteriemoduls senken und so einen etwaigen vorliegenden Verarmungszustand des Batteriemoduls ausgleichen.

In einer bevorzugten Ausgestaltung kann das Verfahren ferner wenigstens einen der folgenden Schritte umfassen:
- Erfassen der Temperatur eines der Batteriemodule
- Erfassen des Ladezustands eines der Batteriemodule
- Erfassen der Spannung eines der Batteriemodule.

Insbesondere umfassen die Batteriemodule des Batteriesystems dazu einen Temperatursensor, eine Spannungsmesseinheit und/oder eine Steuereinheit, wobei die Steuereinheit bevorzugt so ausgelegt ist, dass sie den Ladezustand des Batteriemoduls beispielsweise aus der erfassten Spannung ermitteln kann.

Des Weiteren umfasst das Verfahren insbesondere den Schritt:
Festlegen der Taktzeit in Abhängigkeit wenigstens eines der erfassten Werte, Temperatur, Ladezustand und Spannung. Insbesondere wird die Taktzeit kürzer, wenn die Temperatur sinkt. In gleicher Weise wird die Taktzeit länger, wenn die Temperatur steigt. Die Taktzeit verkürzt sich ferner, wenn der Ladezustand geringer wird. In gleicher Weise verlängert sich die Taktzeit, wenn der Ladezustand steigt. Der Ladezustand wird in Englisch allgemein auch als State of Charge bezeichnet und als SOC abgekürzt.

Wenn während einer hohen Stromentnahme ein Verarmungszustand in einem der Batteriemodule auftritt, bildet sich im Allgemeinen ein Spannungsverlauf am Batteriemodul, der einen Wendepunkt aufweist. Dieser Wendepunkt kann ferner durch Erfassen der Spannung des Batteriemoduls ermittelt werden. Erreicht das erste aktivierte Batteriemodul diesen Spannungswendepunkt, so kann die Taktzeit so festgelegt werden, dass das aktivierte Batteriemodul bei Erreichen des Spannungswendepunkts deaktiviert wird und gleichzeitig stattdessen das zweite Batteriemodul aktiviert wird.

Die Steuereinheit des Batteriesystems ist bevorzugt so ausgelegt, dass sie die Batteriezellen aktivieren und deaktivieren kann. Die Batteriemodule umfassen vorzugsweise eine Koppeleinheit mit steuerbaren Schaltelementen. Diese Schaltelemente können insbesondere derart von der Steuereinheit angesteuert werden, dass das Batteriemodul eine Batteriemodulspannung bereitstellt, das heißt aktiviert ist, oder dass das Batteriemodul eine Spannung von null Volt bereitstellt, wobei das Batteriemodul in diesem Fall überbrückt ist, das heißt deaktiviert ist.

Das Batteriesystem kann über einen Gleichspannungszwischenkreis mit einem Pulswechselrichter verbunden sein, der eine von den Batteriemodulen gelieferte Gleichspannung wechselrichtet. Alternativ kann das Batteriesystem als Batteriedirektinverter ausgebildet sein, wobei mehrere Batteriemodule in Reihe geschaltet einen Batteriemodulstrang bilden und das Batteriesystem mehrere der Batteriemodulstränge umfasst. Die Batteriemodule eines Batteriemodulstrangs sind dabei vorzugsweise derart ansteuerbar, dass sie direkt eine Wechselspannung erzeugen und damit einen Verbraucher speisen. Die mehreren Batteriemodulstränge bilden insbesondere ein Mehrphasensystem.

Die Batteriemodule umfassen vorzugsweise Lithium-Ionen-Batteriezellen, das Batteriesystem ist somit insbesondere ein Lithium-Ionen-Batteriesystem.

### Zeichnungen

Ausführungsbeispiele der Erfindung werden anhand der Zeichnungen und der nachfolgenden Beschreibung näher erläutert. Es zeigen:
Figur 1 ein Diagramm eines bekannten Spannungsverlaufs eines Batteriemoduls,
Figur 2 ein Diagramm eines Spannungsverlaufs eines Batteriemoduls eines Batteriesystems gemäß der Erfindung,
Figur 3 ein Batteriesystem gemäß einem Ausführungsbeispiel der Erfindung,
Figur 4 ein weiteres Batteriesystem gemäß einem Ausführungsbeispiel der Erfindung, und
Figur 5 ein Diagramm zur Veranschaulichung eines Ausführungsbeispiels des erfindungsgemäßen Verfahrens.

### Ausführungsformen der Erfindung

In der Figur 2 ist ein Diagramm eines Spannungsverlaufs eines ersten Batteriemoduls 306 gezeigt. Eine Zeitachse mit Sekundenwerten bildet die Abszisse des Diagramms. Die Ordinate des Diagramms gibt Werte des Spannungsverlaufs bzw. der Batteriemodulspannung in Volt an. Aus dem Batteriemodul 306 wird ab dem Zeitpunkt null Sekunden ein hoher Strom entnommen. Die Batteriemodulspannung sinkt aufgrund der hohen Stromentnahme ab.

Das Batteriemodul umfasst wenigstens eine Lithium-Ionen-Batteriezelle. In dieser wenigstens einen Batteriezelle tritt aufgrund der hohen Stromentnahme eine Verarmung von Ionen an der Moleküloberfläche einer Elektrode der Lithium-Ionen-Batteriezelle auf. Dieser auch als Verarmungseffekt bezeichnete chemische Vorgang verzögert ein Auslagern von Ionen aus der Elektrode, ein Innenwiderstand der wenigstens einen Lithium-Ionen-Batteriezelle steigt. Die Spannung des Batteriemoduls bricht deshalb derart ein, dass der Spannungsverlauf einen Wendepunkt aufweist, wie in der Figur 2 etwa bei 70 Sekunden und 2,95 Volt zu sehen ist.

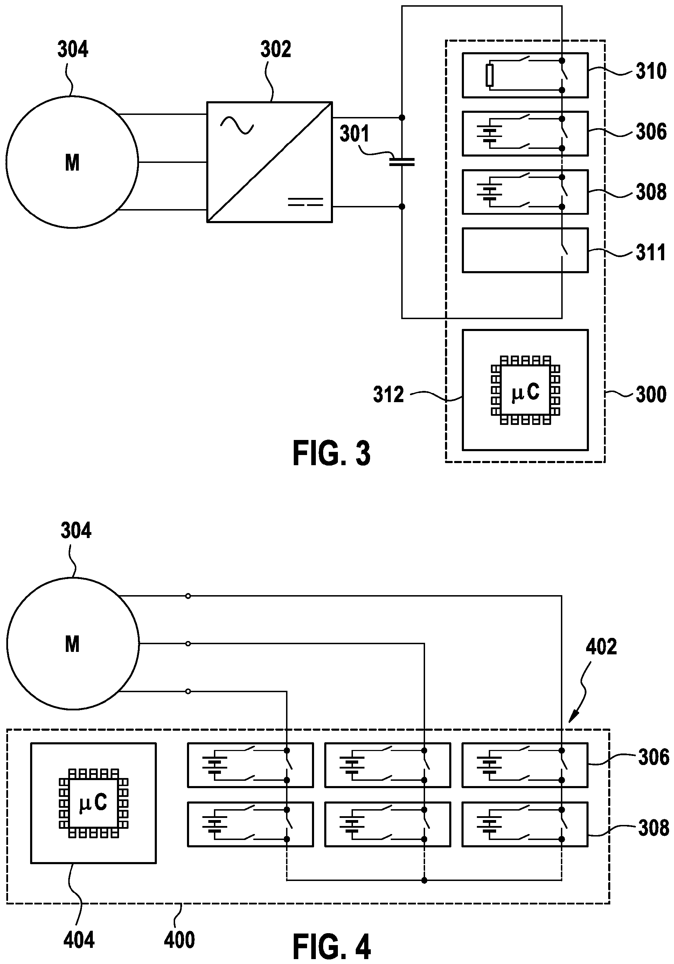

In der Figur 3 ist ein Batteriesystem 300 gemäß einem Ausführungsbeispiel der Erfindung gezeigt. Das Batteriesystem 300 ist über einen Kondensator 301, der einen Gleichspannungszwischenkreis bildet, mit einem Pulswechselrichter 302 verbunden. Der Pulswechselrichter 302 wechselrichtet eine vom Batteriesystem 300 erzeugte Gleichspannung in eine dreiphasige Wechselspannung. Die Wechselspannung speist einen mit dem Pulswechselrichter 302 verbundenen Elektromotor 304. Das Batteriesystem 300 umfasst mehrere Batteriemodule, von denen beispielhaft ein erstes Batteriemodul 306 und ein zweites Batteriemodul 308 in der Figur 3 gezeigt sind. Die Batteriemodule 306, 308 bilden eine Reihenschaltung. An den Enden der Reihenschaltung sind Lade-Trennelemente 310, 311 angeordnet, die die Reihenschaltung der Batteriemodul 306, 308 von einem Verbraucher bzw. vom Kondensator 301 und dem Pulswechselrichter 302 bei Bedarf trennen können. Die Lade-Trennelemente 310, 311 können ferner den Batteriemodulen 306, 308 einen Ladevorwiderstand in Reihe hinzuschalten, um beispielsweise hohe Ladeströme zu begrenzen. Außerdem umfasst das Batteriesystem 300 eine Steuereinheit 312.

Die Batteriemodule 306, 308 umfassen neben der wenigstens einen Lithium-Ionen-Batteriezelle jeweils eine steuerbare Koppeleinheit, die mit der wenigstens einen Lithium-Ionen-Batteriezelle verbunden ist. Die Koppeleinheit umfasst steuerbare Schaltelemente, die derart von der Steuereinheit angesteuert werden, dass ein Batteriemodul seine Batteriemodulspannung bereitstellt oder eine Spannung von null Volt bereitstellt, wobei das Batteriemodul in diesem Fall überbrückt ist.

Die Steuereinheit 312 ist ferner so ausgelegt, dass sie das erste Batteriemodul 306 mittels der Koppeleinheit für eine festgelegte Taktzeit Tₜ aktiviert und nach Ablauf der Taktzeit Tₜ das zweite Batteriemodul 308 mittels der Koppeleinheit für eine weitere Taktzeit Tₜ aktiviert, wobei die Steuereinheit 312 bei der Aktivierung des zweiten Batteriemoduls 308 gleichzeitig das erste Batteriemodul 306 mittels der Koppeleinheit deaktiviert. In ähnlicher Weise kann nach Ablauf der weiteren Taktzeit Tₜ ein drittes Batteriemodul aktiviert werden, wobei gleichzeitig das zweite Batteriemodul 308 deaktiviert wird und so weiter. Außerdem kann in ähnlicher Weise eine erste Gruppe von Batteriemodulen für die Taktzeit Tₜ aktiviert werden und anschließend eine zweite Gruppe von Batteriemodulen für die Taktzeit Tₜ aktiviert werden, wobei gleichzeitig die erste Gruppe von Batteriemodulen deaktiviert wird.

Während das erste Batteriemodul 306 deaktiviert ist, kann es sich regenerieren, es kann insbesondere durch chemische Ausgleichsprozesse dem Verarmungseffekt entgegenwirken und dadurch seinen Innenwiderstand senken.

Die Steuereinheit 312 ist außerdem ausgelegt verschiedene Messwerte zu erfassen. Zu den Messwerten zählen: die Temperatur des Batteriesystems 300, die Temperatur der einzelnen Batteriemodule 306, 308, die Spannung der einzelnen Batteriemodule 306, 308, das heißt die Batteriemodulspannungen und der Ladezustand der einzelnen Batteriemodule 306, 308. Die Steuereinheit 312 legt in Abhängigkeit dieser Messwerte die Taktzeit Tₜ dynamisch fest. Die Taktzeit Tₜ verkürzt sich zum Beispiel, wenn der Ladezustand geringer wird. In gleicher Weise verlängert sich die Taktzeit Tₜ, wenn der Ladezustand steigt.

Der Wendepunkt des Spannungsverlaufs, wie in der Figur 2 gezeigt, wird durch das Erfassen der Batteriemodulspannungen durch die Steuereinheit 312 ermittelt. Erreicht das erste aktivierte Batteriemodul 306 diesen Spannungswendepunkt, so kann die Taktzeit Tₜ so festgelegt werden, dass bei Erreichen des Spannungswendepunkts das zweite Batteriemodul 308 aktiviert wird und gleichzeitig das erste Batteriemodul 306 deaktiviert wird.

In der Figur 4 ist ein Batteriesystem 400 gezeigt. Das Batteriesystem 400 ist im Unterschied zum Batteriesystem 300 direkt mit dem Elektromotor 304 verbindbar. Es umfasst drei Batteriemodulstränge 402, die jeweils eine Phase bilden. Die Batteriemodulstränge 402 weisen jeweils mehrere Batteriemodule auf, von denen beispielhaft jeweils das erste Batteriemodul 306 und das zweite Batteriemodul 308 in der Figur 4 gezeigt sind. Das Batteriesystem 400 weist außerdem eine Steuereinheit 404 auf. Die Steuereinheit 404 steuert die Koppeleinheiten der Batteriemodule 306, 308 derart an, dass die Batteriemodulstränge 402 Wechselspannungen bereitstellen. Die drei Batteriemodulstränge 402 bilden dabei ein Dreiphasensystem.

Die Steuereinheit 404 umfasst ferner die gleichen Funktionen wie die Steuereinheit 312. Insbesondere aktiviert die Steuereinheit 404 das erste Batteriemodul 306 eines Batteriemodulstrangs 402 für die Taktzeit Tₜ und aktiviert anschließend das zweite Batteriemodul 308 für die Taktzeit Tₜ und deaktiviert dabei gleichzeitig das erste Batteriemodul 306. Die Steuereinheit 404 steuert die Batteriemodule 306, 308 dabei so intelligent, dass die vom Batteriemodulstrang 402 bereitgestellte Momentanspannung konstant bleibt. Das Batteriesystem 400 erlaubt also auch während des Bereitstellens von Wechselspannung das Regenerieren von Batteriemodulen.

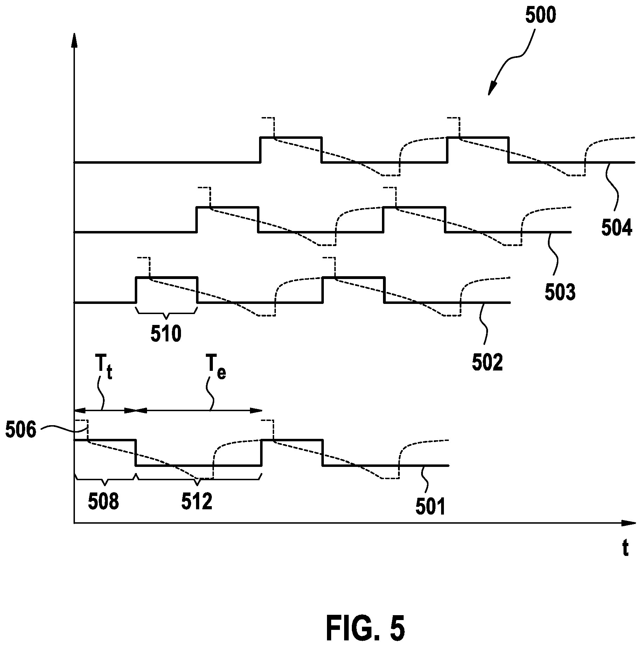

In der Figur 5 ist ein Diagramm 500 zur Veranschaulichung eines Ausführungsbeispiels des erfindungsgemäßen Verfahrens gezeigt. Eine Zeitachse bildet die Abszisse des Diagramms 500. Die Ordinate des Diagramms 500 zeigt Aktivierungszustände 501, 502, 503, 504 von vier Batteriemodulen sowie Spannungswerte von vier Batteriemodulspannungen 506. Der Verlauf der Batteriemodulspannung 506 bildet sich durch eine hohe Stromentnahme aus einem Batteriemodul und entspricht dem in der Figur 2 gezeigten Spannungsverlauf. Die Steuereinheit 312; 404 kann das erste Batteriemodul 306 derart ansteuern, dass die Aktivierungszustände 501 vorliegen und sie kann das zweite Batteriemodul 308 derart ansteuern, dass die Aktivierungszustände 502 vorliegen. In ähnlicher Weise können die Steuereinheiten 312; 404 weitere Batteriemodule ansteuern, so dass die weiteren Aktivierungszustände 503, 504 vorliegen. Ein von der Steuereinheit 312; 404 durchgeführtes Verfahren zum Betreiben des Batteriesystems 300; 400 mit wenigstens dem ersten Batteriemodul 306 und dem zweiten Batteriemodul 308 weist folgende Schritte auf.

In einem ersten Verfahrensschritt 508 aktiviert die Steuereinheit 312; 404 das erste Batteriemodul 306 für die Taktzeit Tₜ. Die Taktzeit Tₜ wurde von der Steuereinheit 312; 404 am Wendepunkt der Batteriemodulspannung 506 festgelegt. Anschließend, das heißt insbesondere nach Ablauf der Taktzeit Tₜ, aktiviert die Steuereinheit 312; 404 in einem zweiten Verfahrensschritt 510 das zweite Batteriemodul 308 für die festgelegte Taktzeit Tₜ. In einem dritten Verfahrensschritt 512 deaktiviert die Steuereinheit 312; 404 gleichzeitig das erste Batteriemodul 306.

Die Steuereinheit 312; 404 deaktiviert dabei das erste Batteriemodul 306 für eine Erholungszeit Tₑ. Die Erholungszeit Tₑ ermöglicht chemische Ausgleichsprozesse, die den Innenwiderstand des ersten Batteriemoduls 306 senken.

Das Batteriesystem 300; 400 mit dem ersten Batteriemodul 306, dem zweiten Batteriemodul 308 und der Steuereinheit 312, 404, die das Verfahren durchführt, kann insbesondere in Kraftfahrzeugen Anwendung finden. Solche Kraftfahrzeuge können den Elektromotor 304 umfassen, der ein Antriebssystem bildet. Das erfindungsgemäße Verfahren steigert dabei die Reichweite des Kraftfahrzeugs und verbessert die Zuverlässigkeit, da ungleichmäßige Belastungen und die Alterung der Batteriemodule verringert werden.

## Patentansprüche

1. Verfahren zum Betreiben eines Batteriesystems (300; 400) mit wenigstens einem ersten (306) und einem zweiten (308) Batteriemodul, umfassend wenigstens folgende Schritte:
- Erfassen der Spannung (506) des ersten Batteriemoduls (306);
- Aktivieren (508) des ersten Batteriemoduls (306) für eine festgelegte Taktzeit (Tₜ), wobei die Taktzeit (Tₜ) in Abhängigkeit der erfassten Spannung (506) festgelegt wird;
- Gleichzeitiges Aktivieren (510) des zweiten Batteriemoduls (308) für die festgelegte Taktzeit (Tₜ) beim Deaktivieren (512) des ersten Batteriemoduls (306);
**dadurch gekennzeichnet, dass**
ein Wendepunkt in einem entsprechenden Spannungsverlauf der erfassten Spannung (506) ermittelt wird und die Taktzeit (Tₜ) so festgelegt wird, dass das erste Batteriemodul (306) bei Erreichen des Wendepunktes in dem Spannungsverlauf deaktiviert wird.

2. Verfahren nach Anspruch 1, wobei das deaktivierte erste Batteriemodul (306) regeneriert wird.

3. Verfahren nach Anspruch 1 oder 2, ferner den Schritt umfassend:
Erfassen der Temperatur eines der Batteriemodule (306, 308).

4. Verfahren nach einem der vorhergehenden Ansprüche, ferner den Schritt umfassend:
Erfassen des Ladezustands eines der Batteriemodule (306, 308).

5. Verfahren nach Anspruch 1, ferner den Schritt umfassend:
Festlegen der Taktzeit (Tₜ) in Abhängigkeit wenigstens eines der erfassten Werte Temperatur und Ladezustand.

6. Batteriesystem (300; 400) mit wenigstens einem ersten (306) und einem zweiten (308) Batteriemodul und einer Steuereinheit (312; 404), die ausgelegt ist, das Verfahren nach einem der vorhergehenden Ansprüche durchzuführen.

7. Batteriesystem nach Anspruch 6, wobei das erste (306) und das zweite (308) Batteriemodul jeweils eine Koppeleinheit zum Aktivieren oder Deaktivieren der Batteriemodule (306, 308) umfassen.

8. Kraftfahrzeug mit einem Batteriesystem (300; 400) nach einem der Ansprüche 6 oder 7, wobei das Batteriesystem (300; 400) mit einem Antriebssystem (304) des Kraftfahrzeugs verbunden ist.

## Claims

1. Method for operating a battery system (300; 400) having at least a first battery module (306) and a second battery module (308), comprising at least the following steps:
- detecting the voltage (506) of the first battery module (306);
- activating (508) the first battery module (306) for a defined clock time (Tₜ), wherein the clock time (Tₜ) is defined as a function of the detected voltage (506);
- at the same time activating (510) the second battery module (308) for the defined clock time (Tₜ) while deactivating (512) the first battery module (306);
**characterized in that**
a point of inflection in a corresponding voltage profile of the detected voltage (506) is determined and the clock time (Tₜ) is defined such that the first battery module (306) is deactivated when the point of inflection in the voltage profile is reached.

2. Method according to Claim 1, wherein the deactivated first battery module (306) is regenerated.

3. Method according to Claim 1 or 2, further comprising the step of:
detecting the temperature of one of the battery modules (306, 308).

4. Method according to one of the preceding claims, further comprising the step of:
detecting the state of charge of one of the battery modules (306, 308).

5. Method according to Claim 1, further comprising the step of:
defining the clock time (Tₜ) as a function of at least one of the detected values from amongst temperature and state of charge.

6. Battery system (300; 400) having at least a first battery module (306) and a second battery module (308) and a control unit (312; 404) which is designed to carry out the method according to one of the preceding claims.

7. Battery system according to Claim 6, wherein the first battery module (306) and the second battery module (308) each comprise a coupling unit for activating or deactivating the battery modules (306, 308).

8. Motor vehicle having a battery system (300; 400) according to either of Claims 6 and 7, wherein the battery system (300; 400) is connected to a drive system (304) of the motor vehicle.

## Revendications

1. Procédé destiné au fonctionnement d'un système de batterie (300 ; 400) comportant au moins un premier (306) et un second (308) module de batterie, comprenant au moins les étapes consistant à :
- détecter la tension (506) du premier module de batterie (306) ;
- activer (508) le premier module de batterie (306) pendant un temps d'horloge prédéterminé (Tₜ), dans lequel le temps d'horloge (Tₜ) est déterminé en fonction de la tension détectée (506) ;
- activer simultanément (510) le second module de batterie (308) pendant le temps d'horloge (Tₜ) réglé lors de la désactivation (512) du premier module de batterie (306) ;
**caractérisé en ce qu'**un point d'inflexion est déterminé dans une courbe de tension correspondante de la tension détectée (506) et **en ce que** le temps d'horloge (Tₜ) est réglé de manière à ce que le premier module de batterie (306) soit désactivé lorsque le point d'inflexion est atteint dans la courbe de tension.

2. Procédé selon la revendication 1, dans lequel le premier module de batterie désactivé (306) est régénéré.

3. Procédé selon la revendication 1 ou 2, comprenant en outre l'étape consistant à :
détecter la température de l'un des modules de batterie (306, 308).

4. Procédé selon l'une des revendications précédentes, comprenant en outre l'étape consistant à :
détecter l'état de charge de l'un des modules de batterie (306, 308).

5. Procédé selon la revendication 1, comprenant en outre l'étape consistant à :
déterminer le temps d'horloge (Tₜ) en fonction d'au moins l'une des valeurs détectées de la température et de l'état de charge.

6. Système de batterie (300 ; 400) comprenant au moins un premier (306) et un second (308) module de batterie et une unité de commande (312 ; 404) qui est conçue pour la mise en œuvre du procédé selon l'une des revendications précédentes.

7. Système de batterie selon la revendication 6, dans lequel les premier (306) et second (308) modules de batterie comprennent chacun une unité de couplage destinée à l'activation ou à la désactivation des modules de batterie (306, 308).

8. Véhicule automobile comportant un système de batterie (300 ; 400) selon l'une des revendications 6 ou 7, dans lequel le système de batterie (300 ; 400) est relié à un système d'entraînement (304) du véhicule automobile.
